# EUROPEAN PATENT APPLICATION

(11) **EP 4 241 573 A1**
(43) Date of publication of application: **13.09.2023**
(21) Application number: 22161678.2
(22) Date of filing: 11.03.2022
(51) Int. Cl.: A23L 2/48, C12H 1/18, A23C 3/033, A23L 2/46, A23L 3/22, H05B 6/02, B65B 1/00

(54) **CONDITIONING DEVICE FOR A PACKAGING PLANT AND PACKAGING PLANT FOR THE PACKAGING OF A POURABLE PRODUCT**

(71) Applicant: Sidel Participations, 76930 Octeville-sur-Mer (FR)
(72) Inventor: MURATORE, Giuseppe, 43126 PARMA (IT)
(74) Representative: Sidel Group

(57) **Abstract**

There is described a conditioning device (1, 1', 1") for conditioning a process fluid to be used within a packaging plant (2) for the packaging of a pourable product. The conditioning device (1, 1', 1") comprises one or more inlets (6) for the process fluid, one or more outlets (7) for the process fluid, a plurality of induction tubes (10, 10', 10") susceptible to be heated by means of induction heating and an induction heater (11, 11') configured to heat the plurality of induction tubes (10, 10', 10") by means of induction heating. The induction heater (11, 11') comprises one or more induction coils (15, 15') and a generator (16) operatively connected to the one or more induction coils (15, 15') and configured to power the one or more induction coils (15, 15') so as to generate at least one electromagnetic field so as to heat the plurality of induction tubes (15, 15').

## Description

### TECHNICAL FIELD

The present invention relates to a conditioning device for a packaging machine for the packaging of pourable products.

Advantageously, the present invention further relates to a packaging machine for the packaging of pourable products.

### BACKGROUND ART

Automatic packaging machines for the packaging of pourable products, e.g. for the packaging of pourable food products in to receptacles such as bottles, cans or the like, are known.

The operation of such automatic packaging machines requires the use of varying kinds of process fluids, which are needed during different process steps and/or at different portions of the automatic packaging machines.

E.g. process fluids of varying kind may be needed to dry sterilized closures, to sterilize/clean parts of the packaging machines, to sterilize/clean parts of the product circuit and many other.

Often these process fluids need to present a desired condition, in particular a desired temperature, which is why the known packaging machines comprise one or more conditioning devices so as to e.g. heat a process fluid.

Conditioning devices such as the one of the heat exchanger type are known. Such conditioning devices comprise a plurality of flow tubes arranged within a shell. Each of the flow tubes is configured to allow for the flow of the process fluid from a respective inlet to a respective outlet under hygienic conditions. As the process fluid needs to be heated, the shell also comprises an auxiliary inlet and an auxiliary outlet such to allow for the entrance and outflow of a conditioning fluid such as steam into and out from the shell.

Other conditioning devices are e.g. of the plate heat exchanger type, which comprise the inlet and outlet for the process fluid and an auxiliary inlet and an auxiliary outlet for the conditioning fluid.

Even though the known conditioning devices work satisfyingly well, there is a desire felt in the sector to improve the known conditioning devices, in particular such to reduce the amount of the conditioning fluid to be used.

A further desire is felt in the sector to provide for improved packaging machines for the packaging of pourable products.

### DISCLOSURE OF INVENTION

It is therefore an object of the present invention to provide an improved conditioning device, in particular coming along with a reduced need of a conditioning fluid.

Advantageously, it is therefore also an object of the present invention to provide an improved packaging machine having an improved conditioning device.

According to the present invention, there is provided a conditioning device as claimed in claim 1.

Preferred non-limiting embodiments are claimed in the claims being directly or indirectly dependent on claim 1.

According to the present invention, there is also provided an apparatus for cleaning or sterilizing a chamber of a filling machine according to claim 17.

According to the present invention, there is also provided an apparatus for drying caps, according to claim 18.

According to the present invention, there is also provided an apparatus for cleaning or sterilizing the product circuit of a filling machine, according to Claim 19.

According to the present invention, there is also provided a packaging plant for the packaging of a pourable product, according to Claim 20.

### BRIEF DESCRIPTION OF THE DRAWINGS

Three non-limiting embodiments of the present invention will be described by way of example with reference to the accompanying drawings, in which:
Figure 1 is a perspective view of a thermal conditioning device according to a first embodiment of the present invention;
Figure 2, is a partial section view of the conditioning device of Figure 1;
Figure 3, is another perspective section view of the conditioning device of Figure 1, with parts removed for clarity;
Figure 4, is an enlarged perspective view of a detail of the conditioning device of Figure 1, with parts removed for clarity;
Figure 5 is a schematic view of a packaging plant for the packaging of pourable products comprising the conditioning device of Figure 1;
Figure 6 is a perspective view of a conditioning device according to a second embodiment of the present invention;
Figure 7 is a section view of the conditioning device of Figure 6;
Figure 8 is another section view of the conditioning device of Figure 6;
Figure 9 is a further perspective view of the conditioning device of Figure 6, with some further parts removed;
Figure 10 is a perspective view of a conditioning device according to a third embodiment of the present invention;
Figure 11 is a section view of the conditioning device of Figure 10;
Figure 12 is a perspective view of the conditioning device of Figure 10, with some more parts removed; and
Figure 13 is an enlarged perspective view of some details of the conditioning device of Figure 10, with parts removed for clarity.

### BEST MODES FOR CARRYING OUT THE INVENTION

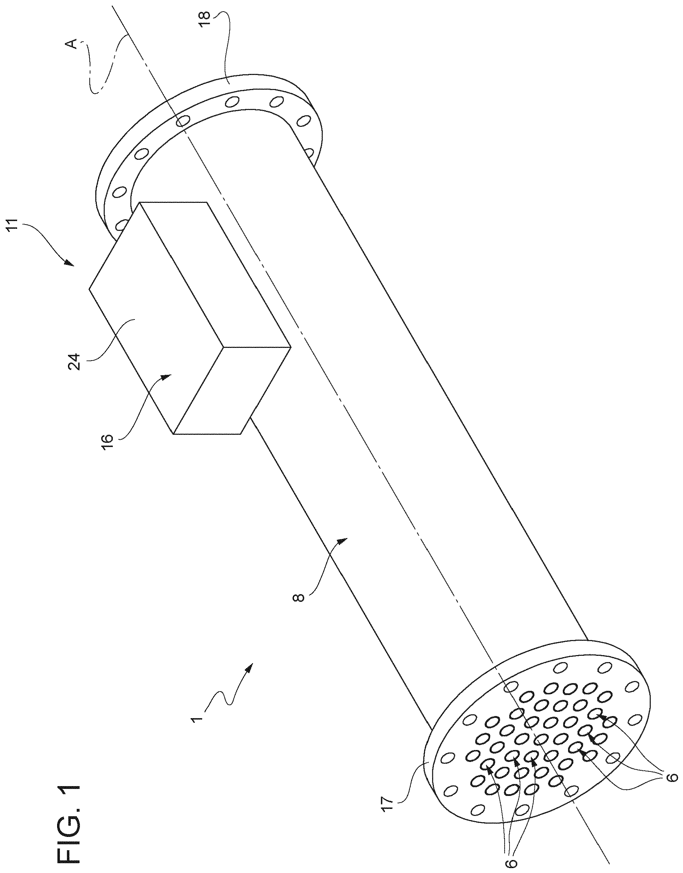

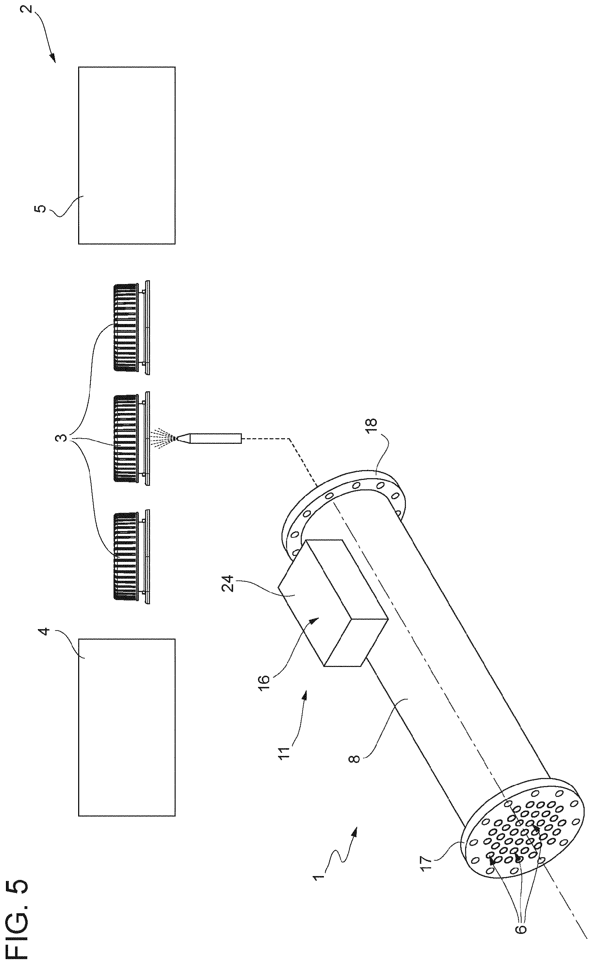

Number 1 in Figure 1 indicates as a whole a thermal conditioning device for a packaging plant 2 (a portion of packaging plant 2 is shown in Figure 5) for the packaging of a pourable product, in particular a pourable food product.

Packaging plant 2 may comprise an automatic packaging machine configured to package the pourable product, in particular the pourable food product, into receptacles, such as bottles, jars, vessels, containers or the like, in particular being made of base components, like glass, paper or cardboard, plastics, aluminum, steel, and composites.

The pourable products may be pourable food products such as carbonated liquids (e.g. sparkling water, soft drinks and beer), non-carbonated liquids (including still water, juices, teas, sport drinks, wine, milk, etc.), emulsions, sauces and beverages containing pulps.

Each receptacle may comprise a main body holding the pourable product and a closure 3 for closing the main body. The closures may be crown corks, screw caps, sports caps, stoppers or similar (and being produced from a variety of materials such as plastics and metal).

Packaging plant 2 may also comprise a product circuit for providing the pourable product and/or a sterilizing agent circuit configured to prepare and deliver a sterilizing agent e.g. for the sterilization of the product circuit and/or the packaging machine and/or a cleaning agent circuit configured to prepare a cleaning agent, a sterile air circuit for preparing and delivering sterile air and similar.

Packaging plant 2 may comprise one or more thermal conditioning device 1.

Thermal conditioning device 1 is configured to thermally condition a process fluid to be used within packaging plant 2.

The process fluid may be a gas or a liquid. E.g. the process fluid may be air, in particular sterile air, a gas, a sterile gas, water, sterile water, a chemical solution, a chemical solution based on alkaline and/or acid or the like.

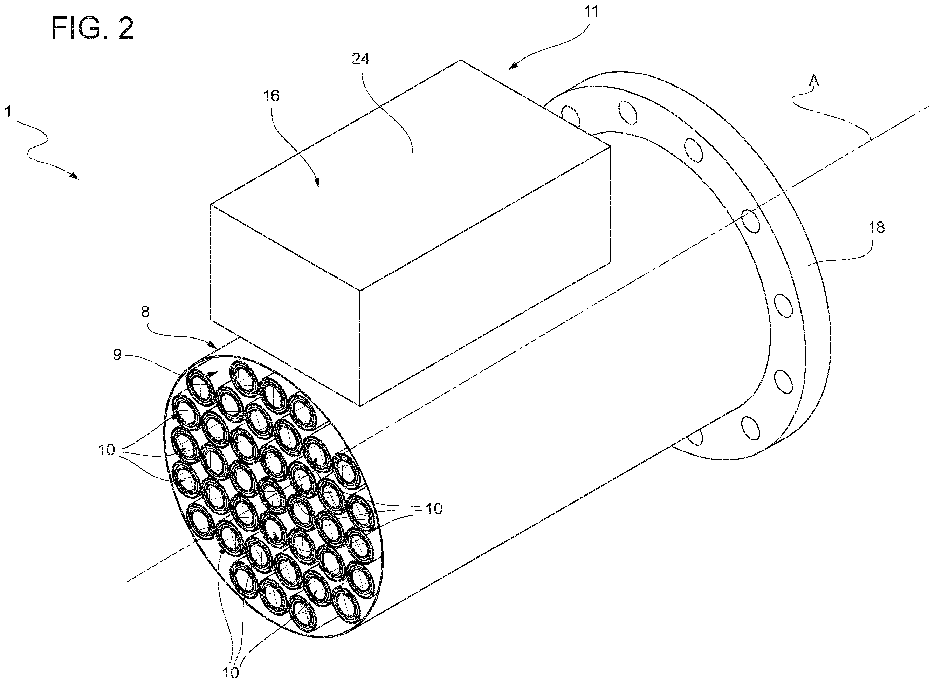

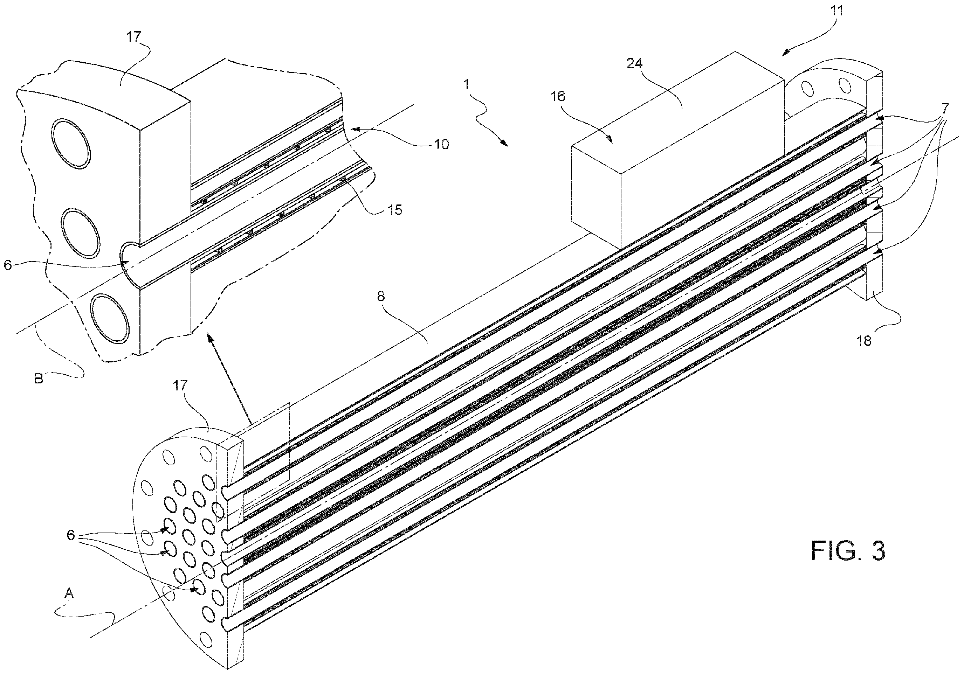

According to the specific embodiment of Figures 1 to 5, conditioning device 1 is configured to maintain the hygienic condition of the process fluid during its conditioning by means of conditioning device 1.

According to some possible embodiments, conditioning device 1 may be part of cleaning-in-place (CIP) process circuits, in sterilization in place (SIP) process circuits, Ultra-high temperature processing (UHT) process circuits, hot air preparation circuits, chemical preparation process circuits, cleaning out of place (COP) process circuits, sterilization out of place (SOP) process circuits, hot air preparation circuits, and the like.

Figure 5 illustrates the example in which conditioning device 1 is used for the conditioning of a process fluid, in particular hot and sterile air, applied to the drying of closures 3.

More specifically, packaging plant 2 may comprise a cap sterilization apparatus 4 for sterilizing closures 3. Sterilization apparatus 4 may comprise conditioning device 1.

Even more particular, conditioning device 1 may be part of a drying circuit of cap sterilization apparatus 4 for drying closures 3 after having been brought into contact with a sterilization agent.

Packaging plant 2 may also comprise a capper 5, which is configured to receive the sterilized and dry closures 3 for applying closures 3 onto receptacles filled with the pourable product.

With particular reference to Figures 1 to 4, conditioning device 1 comprises:
- at least one inlet 6, in the specific cases shown a plurality of inlets 6, for the process fluid;
- at least one outlet 7, in the specific example a plurality of outlets, for the process fluid;
- a plurality of induction tubes 10 susceptible to be heated by means of induction;
- an induction heater 11 configured to heat induction tubes 10 by means of induction heating.

Preferentially, conditioning device 1 may also comprise a shell 8 having an inner space 9. In particular, the plurality of induction tubes 10 may be arranged within inner space 9.

Preferentially, induction heater 11 may be configured to heat induction tubes 10 by means of induction heating such to heat the process fluid flowing, in use, from the one or more inlets 6 to the one or more outlets 7.

According to the embodiment of Figures 1 to 5, each induction tube 10 may comprise one respective inlet 6 and one respective outlet 7.

Moreover, each induction tube 10 may be configured to allow for a flow of the process fluid from inlet 6 to outlet 7 and induction heater 11 may be configured to heat each induction tube 10 so as to heat the process fluid flowing within each respective induction tube 10.

With particular reference to Figures 1 to 5, induction heater 11 comprises:
- one or more induction coils 15, in the specific embodiment a plurality of induction coils 15; and
- a generator 16 which is operatively connected to the one or more induction coils 15, and which is configured to power the one or more induction coils so as to generate an electromagnetic field, to heat the plurality of induction tubes.

Each induction coil 15 may be associated to one respective induction tube 10 and being configured to heat the respective induction tube 10, and in particular to heat the respective process fluid flowing, in use, from the respective inlet 6 to the respective outlet 7.

According to some possible non-limiting embodiments, conditioning device 1, in particular shell 8, may extend along a respective central axis A.

Additionally, each induction tube 10 may extend along a respective central axis B which is parallel to central axis A.

According to the embodiment of Figure 1 to 5, each induction tube 10 may extend along the respective central axis B, between the respective inlet 6 and the respective outlet 7.

Moreover, conditioning device 1 may also comprise a first end piece 17, in particular a first end plate, and a second end piece 18, in particular a second end plate. In particular, first end piece 17 and second end piece 18 may be spaced apart from one another along central axis A.

Shell 8 may be interposed between and connected to, in particular fixed to, first end piece 17 and second end piece 18.

According to some preferred non-limiting embodiments, each induction tube 10 may be connected to first end piece 17 and second end piece 18.

More specifically, first end piece 17 and second end piece 18 may comprise each a plurality of housing seats, e.g. through-holes. Respective end portions 19 of each induction tube 10 may be placed within respective housing seats of first end piece 17 and second end piece 18. In particular, each end portion 19 may comprise the respective inlet 6 or the respective outlet 7.

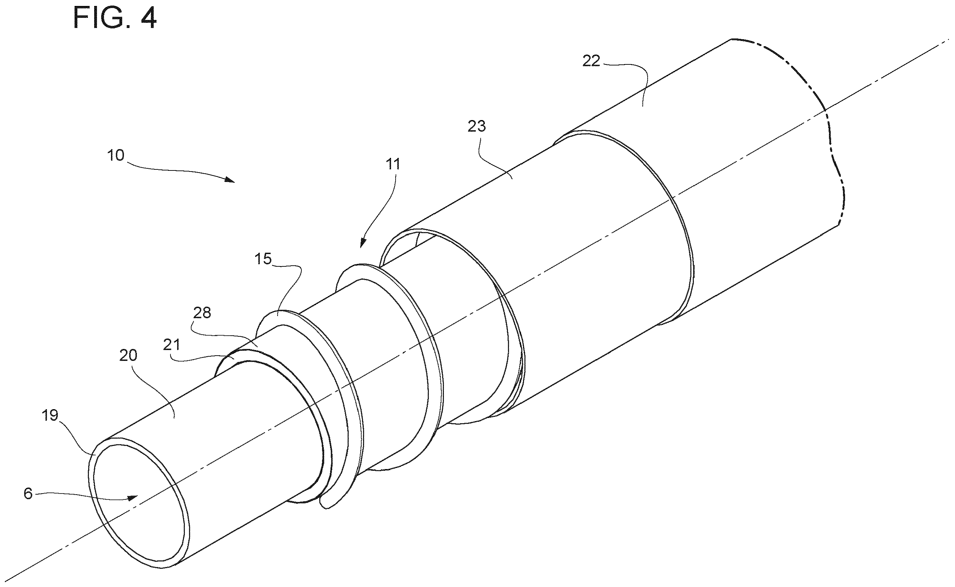

With particular reference to Figure 4, each induction tube 10 may comprise an inner pipe 20, in particular a hollow inner pipe 20, and an outer pipe 21 surrounding the respective inner pipe 20; i.e. portions of inner pipe 20 are arranged within outer pipe 21. In particular, inner pipe 20 may comprise the respective inlet 6 and the respective outlet 7.

Preferentially, inner pipe 20 may be formed from a non-magnetic and non-ferromagnetic material, in particular such that the electromagnetic field generated by the respective induction coil 15 may not directly heat inner pipe 20; i.e. the electromagnetic field cannot generate eddy currents within inner pipe 20.

Preferentially, an inner surface of inner pipe 20 may present a surface roughness of less than 1 micrometer, in particular less than 0,8 micrometer.

According to some preferred non-limiting embodiments, each inner pipe 20 may comprise and/or is formed from a hygienic material, in particular a hygienic stainless steel (e.g. AISI316L). It should be noted that a hygienic material is a material, which can be used with process fluids, which need to maintain their sterile conditions when being in contact with the hygienic material. Therefore, inner pipe 20 can be considered a hygienic pipe.

According to some preferred non-limiting embodiments, outer pipe 21 may comprises and/or may be formed from a magnetic and/or ferromagnetic material, e.g. ferromagnetic stainless steel (such as AISI430) such that the electromagnetic field generated by the respective induction coil 15 may heat outer pipe 21, i.e. the electromagnetic field may generate eddy currents within outer pipe 21.

In particular, in use, the heating of each outer pipe 21 by means of induction heating allows to heat the respective inner pipe 20 by conduction, which again leads to heating by convection the process fluid which is flowing within the respective inner pipe 20. Preferentially, inner pipe 20 and outer pipe 21 may be coaxially arranged with respect to one another.

According to some preferred non-limiting embodiments, each induction coil 15 may be wound about the respective outer pipe 21, in particular each induction coil 15 may form a spire.

According to some preferred non-limiting embodiments, each induction tube also comprises one or more dielectric material inner layers 28, which are arranged between the respective inner pipe 20 and the respective outer pipe 21 and/or between the respective outer pipe 21 and the respective induction coil 15.

With reference to Figure 4, each induction tube 10 may also comprise a shielding layer 22, e.g. an aluminum layer, in particular surrounding the respective induction coil 15. In particular, shielding layer 22 may be formed from a material adapted to shield electromagnetic radiation.

Moreover, each induction tube 10 may also comprise a dielectric material outer layer 23, which is interposed between the respective induction coil 15 and the shielding layer 22.

Generator 16 may be configured to feed an alternating AC-current into the one or more induction coils 15.

Moreover, generator 16 may comprise a housing 24 within which is arranged the control electronics of generator 16.

Housing 24 may be mounted onto shell 8.

Preferentially, generator 16 may be connected to a power supply unit.

In use, conditioning device 1 conditions, in particular thermally conditions, even more particular heats, the process fluid by means of induction heating.

Induction heater 11 heats induction tubes 10 for heating the process fluid during its flow from the respective inlet 6 to the respective outlet 7.

In particular, each induction tube 10 receives the process fluid at its respective inlet 6 and allows outflow of the heated process fluid through the respective outlet 7.

Generator 16 selectively applies an AC-current to each induction coil 15 so as to generate the respective electromagnetic fields, which heat induction tube 10, in particular by heating outer pipe 21. Moreover, the heating of each outer pipe 21 then results in the heating of the respective inner pipes 20, which again allows to heat the process fluid flowing within inner pipes 20.

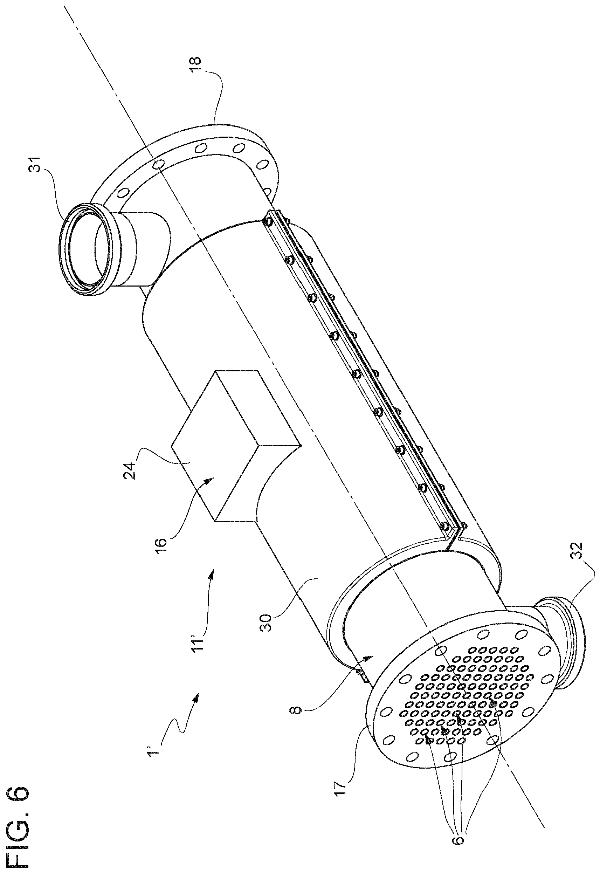

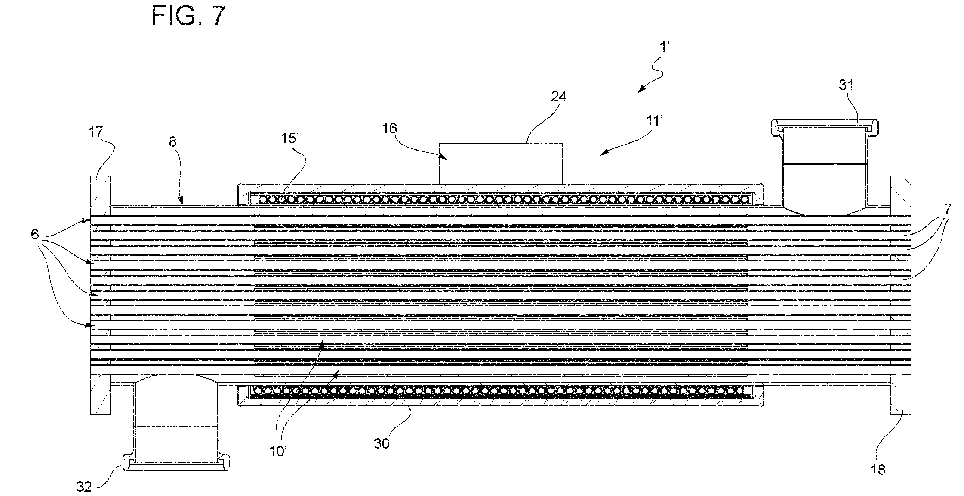

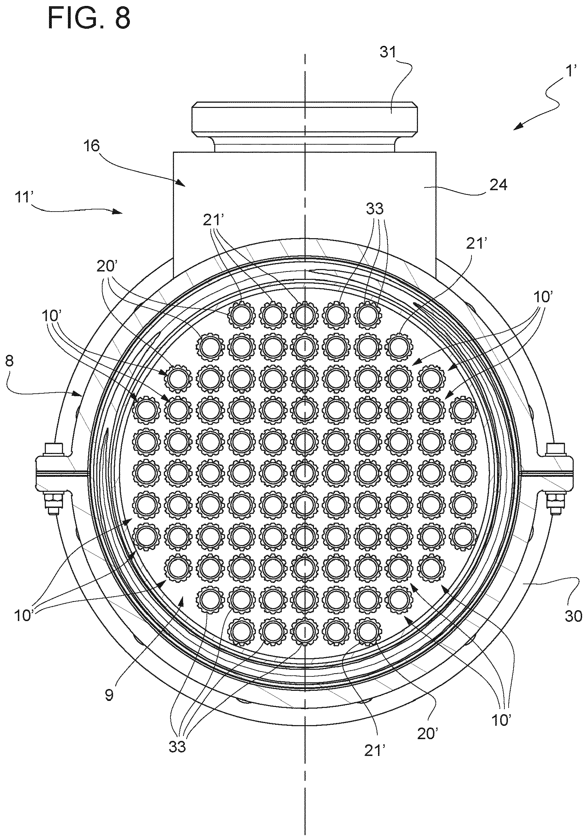

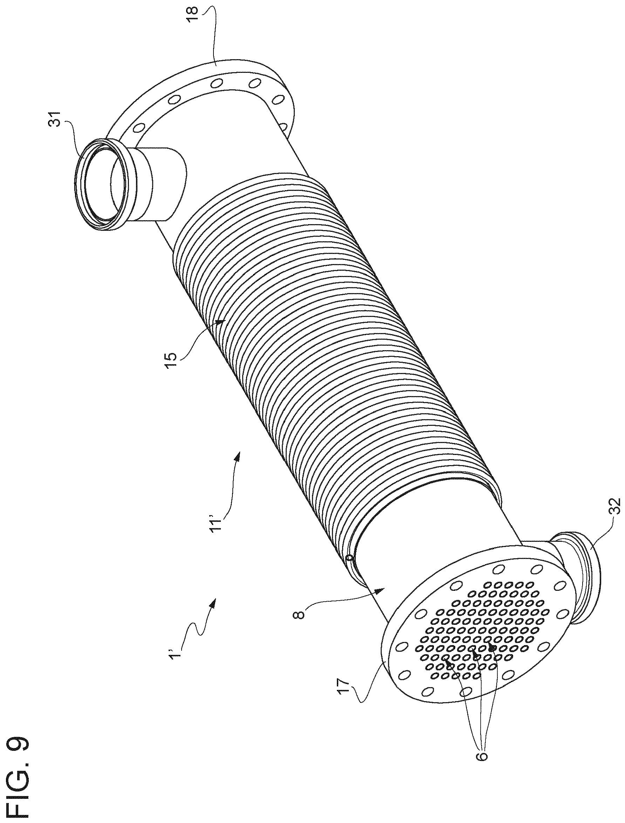

With reference to Figures 6 to 9, number 1' indicates a conditioning device according to a second embodiment of the present application. As conditioning device 1' is similar to conditioning device 1, the present description is limited to the differences between conditioning device 1' and conditioning device 1, using the same reference numerals for equal or similar parts.

Conditioning device 1' differs from conditioning device 1 in comprising induction heater 11'. As induction heater 11' is similar to induction heater 11, the following description is limited to the differences between induction heater 11 and induction heater 11' using the same reference number for similar or equal parts.

In particular, induction heater 11' differs from induction heater 11 in that induction heater 11' is configured to heat all the tubes 10' by means of at least one single coil which is wound around the shell 8.

In particular, induction heater 11' comprises one induction coil 15' being arranged, in particular wound, about shell 8. Alternatively, induction heater 11' could comprise more than one induction coil 15', each of which being wound about shell 8.

Additionally, conditioning device 1' differs from conditioning device 1 in comprising an outer cover 30 surrounding induction coil 15' . In particular, induction coil(s) 15' is/are interposed between outer cover 30 and shell 8.

Furthermore, conditioning device 1' may comprise a shielding layer arranged about induction coil(s) 15'.

Moreover, conditioning device 1' may comprise one or more layers of dielectric material interposed between shell 8 and induction coil(s) 15' and/or induction coil(s) 15' and the shielding layer and/or outer cover 30.

According to some possible non-limiting embodiments, conditioning device 1' may also comprise an auxiliary inlet and an auxiliary outlet configured to allow respectively inflow and outflow of a cooling fluid into inner space 9.

In particular, the cooling fluid may be configured to allow for a cooling of the process fluid which is flowing through the tubes 10, in particular by cooling induction tubes 10'. The cooling fluid preferably flows in counter current with respect to the process fluid, to optimize the heat exchange.

Furthermore, conditioning device 1' also differs from conditioning device 1 in comprising induction tubes 10'. Induction tubes 10' are similar to induction tubes 10 and the following description is limited to the differences between induction tubes 10' and induction tubes 10.

In particular, each induction tube 10' comprises inner pipe 20' and outer pipe 21'. The inner pipe 20' could be a hygienic pipe like the inner pipe 20 of the first embodiment.

Each outer pipe 21' may comprise one or more outer grooves 33, in particular extending parallel to the respective central axis B.

In particular, each groove 33 faces away from the respective inner pipe 20'.

Moreover, each outer pipe 21' may comprise the one or more outer grooves 33 so as to increase heat transfer from outer pipe 21' to the cooling fluid.

In particular, conditioning device 1' may be part of a cleaning-in-place (CIP) process circuit, a sterilization in place (SIP) process circuit or an ultra-high temperature processing (UHT) process circuit.

As operation of conditioning device 1' is similar to operation of conditioning device 1, the following description is limited to the differences between conditioning device 1' and conditioning device 1.

In particular, induction heater 16 heats induction tubes 10' with one common electromagnetic field and not by one respective electromagnetic field for each tube 10'.

Moreover, the cooling fluid may be introduced into inner space 9 through auxiliary inlet 31 and may flow out of inner space 9 through auxiliary outlet 32.

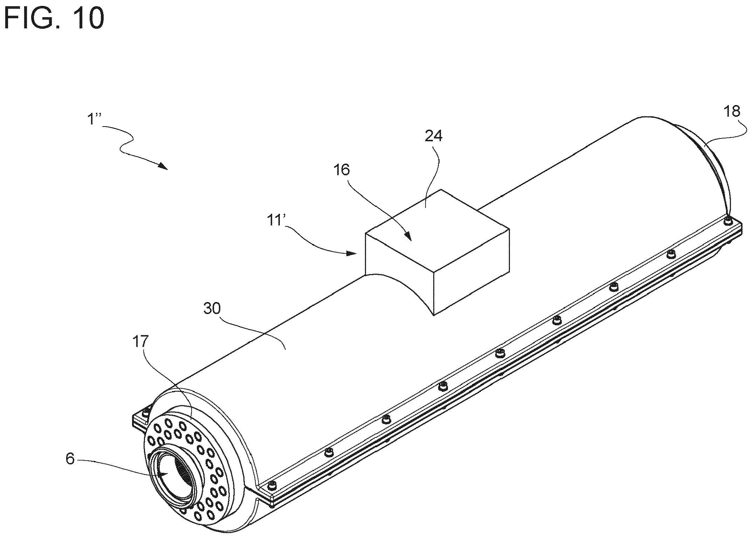

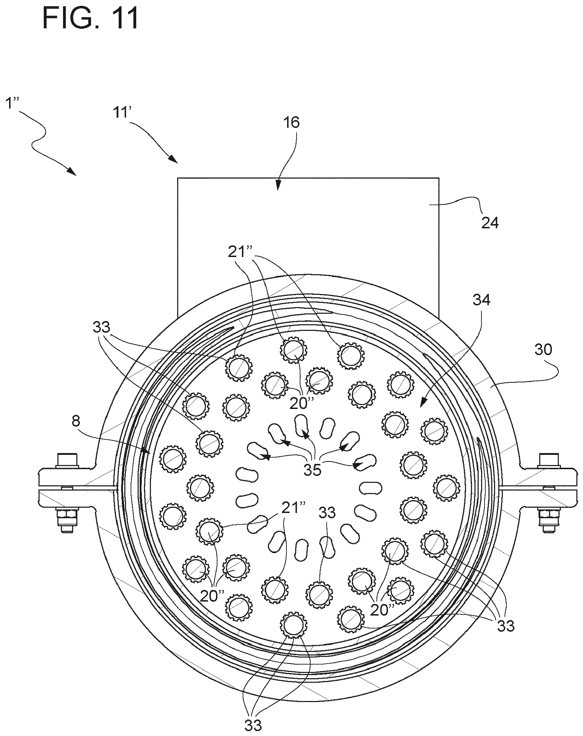

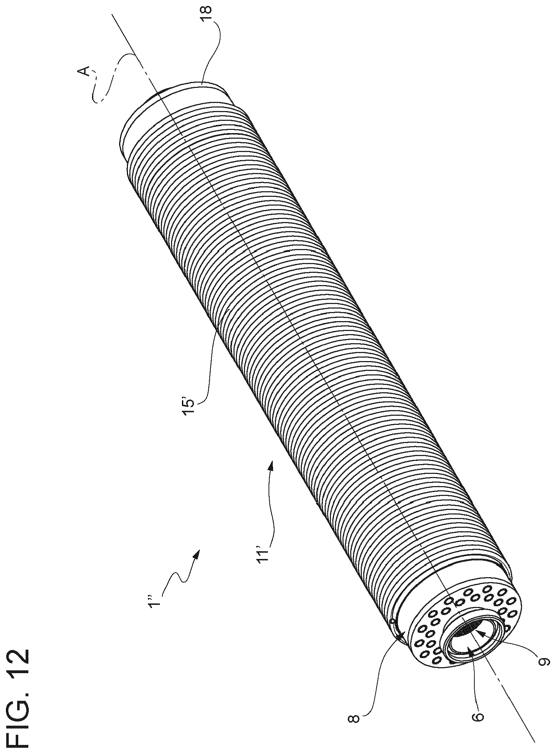

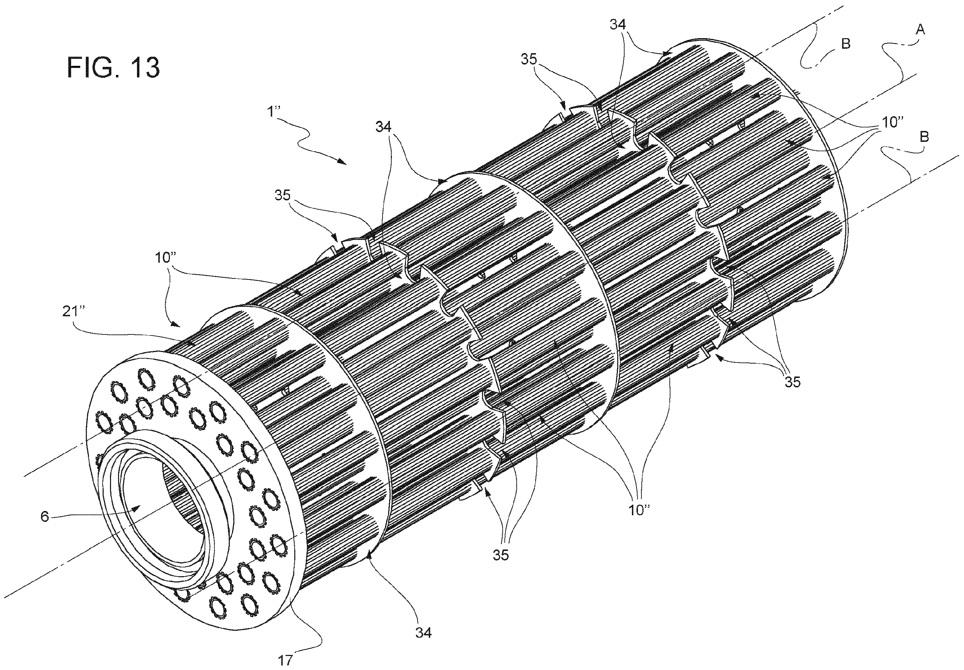

With reference to Figures 10 to 13, number 1" indicates a conditioning device according to a third embodiment of the present invention. As conditioning device 1" is similar to conditioning device 1', the present description is limited to the differences between conditioning device 1" and conditioning device 1', using the same reference numerals for equal or similar parts.

In particular, conditioning device 1" is configured such that shell 8 comprises or defines inlet 6 and outlet 7. Accordingly, the process fluid does not flow within induction tubes 10", but within inner space 9 and between induction tubes 10" . The induction heating effect is carried out by means of the common coil 15', to heat the induction tubes 10'.

Induction tubes 10" are therefore configured to be heated by induction heater 11' so as to heat the process fluid flowing within inner space 9, between the tubes 10", and from inlet 6 to outlet 7.

As it is the case for induction heater 1', induction heater 11' comprises one or more induction coils 15', in the specific case shown one induction coil 15', wound about shell 8.

Preferentially, conditioning device 1" lacks auxiliary inlet 31 and auxiliary outlet 32.

Conditioning device 1" furthermore differs from conditioning device 1' in comprising induction tubes 10".

Each induction tube 10" comprises a respective inner core 20" being placed within the respective outer pipe 21" .

Preferentially, inner core 20" is solid; i.e. not hollow.

According to some preferred non-limiting embodiments, each inner core 20" may comprise and/or is formed from a magnetic and/or ferromagnetic material, in particular magnetic and/or ferromagnetic stainless steel (e.g. AISI430), so as to be adapted to interact with the electromagnetic field generated by induction heater 11'.

Moreover, each outer pipe 21" may comprises and/or may be formed from a non-magnetic and/or non-ferromagnetic material, in particular a non-magnetic and/or non-ferromagnetic stainless steel (e.g. AISI316L).

Thus, in difference to inner tube 10 and inner tube 10', it is not outer pipe 21 within which the electromagnetic field generates the eddy currents, but it is within each inner core 20" such that each inner pipe 20" is directly heated and the respective outer pipe 21" is indirectly heated through the respective inner core 20".

Moreover, each outer pipe 21" comprises, as outer pipes 21' of induction tubes 10', outer grooves 33. In this case, outer grooves 33 allow to improve the overall heat transfer from outer pipes 21" into process fluids.

Conditioning device 1" also comprises a plurality of direction plates 34 arranged within inner space 9, each one having a plurality of first apertures, each first aperture being penetrated by one respective induction tube 10" and one or more second apertures 35, each second aperture 35 being configured to allow for the passing of the process fluid.

In particular, direction plates 34 are spaced apart from one another along central axis A.

Moreover, the positions of second apertures 35 of one direction plate 34 differ from position of second apertures 35 of the neighboring direction plates 34.

In particular, each direction plate 34 comprises one neighboring direction plate 34 being closer to first end piece 17 than the respective direction plate 34 and one neighboring direction plate 34 being closer to second end piece 18 than the respective direction plate 34.

Even more particular, each direction plate 34 is interposed between two neighboring direction plates 34 without the presence of other direction plates 34.

Such an arrangement of second apertures 35 allows to define the flow of the pourable product from inlet 6 to outlet 7 such to maximize the heat transfer.

In particular, conditioning device 1" can be advantageously applied in applications in which the process fluid does not get into contact with a surface of the packages produced within packaging plant 2.

In particular, conditioning device 1" may be part of chemical preparation circuits of packaging plant 2, which prepare e.g. alkaline or acid solutions or sterilizing agents.

As operation of conditioning device 1" is similar to operation of conditioning device 1', the following description is limited to the differences between conditioning device 1" and conditioning device 1'.

In particular, the process fluid flows from inlet 6 to outlet 7 and through inner space 9. Thereby, the process fluid is heated as induction heater 11' heats induction tubes 10", in particular by the electromagnetic field inducing eddy currents within the respective inner pipes 20".

The advantages of conditioning device 1, conditioning device 1' and conditioning device 1" will be clear from the foregoing description.

In particular, by relying on induction tubes 10, 10' or 10" and heating by induction heating, one can efficiently heat the process fluid without the need to use a conditioning fluid, such as steam.

Moreover, conditioning devices 1, 1' and 1" allow a precise, efficient and fast control of the temperatures of the process fluid.

Additionally, conditioning devices 1 and 1" do not require additional tubes for the conditioning fluid to be connected to conditioning devices 1 and 1".

According to some non-shown embodiments, packaging plant 2 may comprise a cleaning or sterilizing apparatus for cleaning or sterilizing a filling machine of packaging plant 2 and/or filling circuits of the filling machine, e.g. during a CIP or SIP or COP or SOP cycle, may comprise at least one conditioning device 1, 1' or 1".

E.g. the filling machine may comprise the cleaning or sterilizing apparatus.

Alternatively or in addition, conditioning device 1, 1' or 1" may be part of a cap drying system for drying caps 3. In particular, the cap drying system may be part of a caps sterilization apparatus.

In the all the embodiments, each induction tube comprises at least one respective outer pipe 21 or 21' or 21". In all the embodiments, each induction tube comprises at least one respective inner element, which is arranged within the outer pipe 21 or 21' or 21". Each outer pipe 21 or 21' or 21" surrounds the respective inner element.

In each of the first embodiment 1 and in the second embodiment 1', each inner element corresponds to a respective inner pipe 20 or 20'. In each of the first embodiment and the second embodiment, each outer pipe 21 or 21' comprises a ferromagnetic and/or magnetic material.

In the first embodiment 1, the induction heater 16 comprises a plurality of induction coils 15 which are connected to the generator 16. Each induction coil 15 is associated to one respective induction tube 10. In each of the first embodiment and the second embodiment, each outer pipe 21 or 21' surrounds and is coaxial with respect to the respective inner pipe 20 or 20'. In the first embodiment, each induction coil 15 is wound about a respective outer pipe 21. In this way the induction heating can be better employed to heat he process fluid which is flowing through the respective inner pipe 20.

The first embodiment 1 allows to save energy, by obtaining the heating of the process fluid by means of induction, and to optimize the induction in case where, after the heating of the process fluid, a cooling effect is not needed. Also, the first embodiment 1 is in particular adapted in case the process fluid needs to be kept sterile, thanks to each inner pipe 20 being an hygienic inner pipe 20.

Each of the first embodiment 1 and the second embodiment 1' is configured so that the process fluid is heated by means of the induction heater 11 or 11', while flowing through the inner pipes 20 or 20' of the induction tubes 10 or 10'.

In each of the first embodiment 1 and the second embodiment 1', each outer pipe 21 or 21' comprises a ferromagnetic and/or magnetic material, to allow the heating of the outer pipe 21 or 21' by induction. In each of the first embodiment 1 and the second embodiment 1', each induction heated outer pipe 21 or 21' heats by conduction the respective inner pipe 20 or 20'. In each of the first embodiment 1 and the second embodiment 1', each conduction heated inner pipe 20 or 20' heats by convection the process fluid which is flowing through the inner pipe 20 or 20'.

In each of the second embodiment 1' and the third embodiment 1", each outer pipe 21' or 21" comprises a plurality of respective longitudinal outer grooves 33, which are faced towards the opposite side with respect to the inner element.

In each of the second embodiment 1' and the third embodiment 1", the device comprises a shell 8 defining an inner space 9. The shell 8 can be for example a tube shaped shell.

The induction tubes 10' or 10" are arranged within the inner space 9.

In each of the second embodiment 1' and the third embodiment 1", the induction heater 11' or 11" comprises at least one single induction coil 15' which is wound about the shell 8. The induction coil 15' is a common coil for all the induction tubes 10' or 10".

The second embodiment 1' is configured so that the process fluid is cooled while flowing through the inner pipes 20 or 20' of the induction tubes 10 or 10' and by means of a cooling fluid flowing in counter current between the induction tubes 10'.

In the second embodiment 1', the conditioning device comprises an auxiliary inlet 31 and an auxiliary outlet 32, which are configured to allow respectively inflow and outflow of the cooling fluid into the inner space 9. In the second embodiment 1', the outer grooves 33 improves the heat exchange during cooling.

Therefore, the second embodiment 1' allows to save energy, by obtaining the heating of the process fluid by means of induction, and to obtain also, after the heating of the process fluid, a cooling effect with the same conditioning device. Also, the second embodiment 1' is in particular adapted in case the process fluid needs to be kept sterile, thanks to each inner pipe 20' being a hygienic inner pipe 20'.

More in particular, the second embodiment 1' is particularly adapted to operate within an apparatus for cleaning or sterilizing the product circuit of the filling machine, in which case the cooling of the process fluid is needed after the cleaning or sterilization phase, because the circuit must be cooled before resuming the production.

The third embodiment 1" is configured so that the process fluid is heated by means of the induction heater 11' while flowing between the induction tubes 10". Therefore, in the third embodiment 1", each inner element can correspond to a respective inner solid core. Each inner core 20" comprises a ferromagnetic and/or magnetic material, and/or each outer pipe 21" does not comprise a ferromagnetic or magnetic material. In the third embodiment 1", the shell 8 defines one inlet for the process fluid 6 and defines one outlet 7 for the process fluid. In the third embodiment 1", the outer grooves 33 improves the heat exchange during heating.

In the third embodiment 1", the device 1" comprises a plurality of direction disks 34 arranged within inner space 9, each one having a plurality of first apertures and a plurality of peripheral recesses 35. Each first aperture is penetrated by and supports one respective induction tube 10". Each recess 35 is configured to allow for the passing of the process fluid through the disk 34. In this way the structural complexity is reduced, to have a less expensive conditioning device 1".

In particular, each of the first embodiment 1, the second embodiment 1' and the third embodiment 1" is particularly adapted to operate within an apparatus for cleaning or sterilizing a chamber of a filling machine, the filling machine being for filling a plurality of containers with a pourable product. The first embodiment can be used also for example within an apparatus for drying caps, for example within a cap sterilizer.

The third embodiment 1" is in particular adapted to be used when the process fluid is used for sterilization but does not need to be kept sterile, as it is already sterile in itself.

The process fluid can be for example water. The process fluid can be for example gas, sterile gas, water, sterile water, a chemical solution, a chemical solution based on alkaline and/or acid or the like.

According to some possible embodiments, packaging plant 2 may comprise one or more conditioning devices 1 and/or one or more conditioning devices 1' and/or one or more conditioning devices 1". In particular, the one or more conditioning devices 1 may be part of different portions of packaging plant 2 than the one or more conditioning device 1' and/or the one or more conditioning devices 1 may be part of different portions of packaging plant 2 than the one or more conditioning device 1" and/or the one or more conditioning devices 1' may be part of different portions of packaging plant 2 than the one or more conditioning device 1".

## Claims

1. Thermal conditioning device (1, 1', 1") for thermally conditioning a process fluid to be used within a packaging plant (2) for the packaging of a pourable product;
the conditioning device (1, 1', 1") comprises:
- one or more inlets (6) for the process fluid;
- one or more outlets (7) for the process fluid;
- a plurality of induction tubes (10, 10', 10") which are configured to be heated by means of induction heating; and
- an induction heater (11, 11') configured to heat the plurality of induction tubes (10, 10', 10") by means of induction heating;
wherein the induction heater (11, 11') comprises:
- one or more induction coils (15, 15'); and
- a generator (16) operatively connected to the one or more induction coils (15, 15') and configured to power the one or more induction coils (15, 15') so as to generate at least one electromagnetic field, to heat the plurality of induction tubes (15, 15').

2. Conditioning device according to claim 1, wherein each induction tube (10, 10', 10") comprises at least one respective outer pipe (21, 21', 21") and at least one respective inner element (20, 20', 20''), which is arranged within the outer pipe (21, 21', 21").

3. Conditioning device according to Claim 2, wherein each inner element is a respective inner pipe (20, 20').

4. Conditioning device according to claim 3, wherein each outer pipe (21, 21') comprises a ferromagnetic and/or magnetic material.

5. Conditioning device according to Claim 3 or 4, further comprising a shell (8) having an inner space (9);
the induction tubes (10', 10") being arranged within the inner space (9);
wherein the induction heater (11') comprises at least one single induction coil (15') which is wound about the shell (8), the single induction coil (15') being a common coil for all the induction tubes (10', 10").

6. Conditioning device according to claim 5, further comprising an auxiliary inlet (31) and an auxiliary outlet (32) configured to allow respectively inflow and outflow of a cooling fluid into the inner space (9);
the device (1') being configured so that the process fluid is cooled while flowing through the inner pipes (20') of the induction tubes (10') and by means of the cooling fluid flowing in counter current between the induction tubes (10').

7. Conditioning device according to Claim 3 or 4, wherein the induction heater (16) comprises a plurality of induction coils (15) which are connected to the generator (16) and each induction coil (15) being associated to one respective induction tube (10), each induction coil (15) being wound about one respective outer pipe (21).

8. - Conditioning device according to any of claims from 4 to 7, wherein each induction tube (10) also comprises one or more layers of dielectric material arranged between the respective inner pipe (20) and the respective outer pipe (21) and/or the conditioning device comprises one or more layers of dielectric material which are arranged between at least one outer pipe (21) and at least one induction coil (15).

9. Conditioning device according to any of claims from 4 to 8, wherein the device (1, 1') is configured so that the process fluid is induction heated by means of the induction heater (11; 11'), while the process fluid is flowing through the inner pipes (20, 20') of the induction tubes (10, 10').

10. Conditioning device according to any of previous claims, comprising a plurality of inlets (6) and a plurality of outlets (7) for the process fluid; wherein each induction tube (10, 10') carries or defines one respective inlet (6) and one respective outlet (7).

11. Conditioning device according to Claim 2, wherein each inner element is a respective inner solid core (20").

12. Conditioning device according to Claim 11, wherein each inner core (20") comprises a ferromagnetic and/or magnetic material, and each outer pipe (21") does not comprise a ferromagnetic or magnetic material.

13. Conditioning device according to Claim 11 or 12, further comprising a shell (8) having an inner space (9);
the induction tubes (10', 10") being arranged within the inner space (9);
wherein the induction heater (11') comprises at least one single induction coil (15') which is wound about the shell (8), the single induction coil (15') being a common coil for all the induction tubes (10', 10").

14. Conditioning device according to claim 13, wherein the shell (8) defines one inlet for the process fluid (6) and defines one outlet (7) for the process fluid;
the device (1") being configured so that the process fluid is heated by means of the induction heater (11"), while the process fluid is flowing between the induction tubes (10").

15. Conditioning device according to claim 14, further comprising a plurality of direction disks (34) arranged within inner space (9), each one having a plurality of first apertures, each first aperture being penetrated by and/or supporting one respective induction tube (10"), and one or more peripheral recesses (35), each recess (35) being configured to allow for the passing of the process fluid.

16. Conditioning device according to Claim 6 or to any of Claims from 11 to 15, wherein each outer pipe (21', 21'') comprises a respective plurality of longitudinal outer grooves (33), which are faced towards the opposite side with respect to the respective inner element.

17. Apparatus for cleaning or sterilizing a chamber of a filling machine, the filling machine being for filling a plurality of containers with a pourable product, the apparatus comprising a device according to any of the previous Claims.

18. Apparatus for drying caps comprising a device according to any of Claims from 1 to 16.

19. Apparatus for cleaning or sterilizing the product circuit of a filling machine, the filling machine being for filling a plurality of containers with a pourable product, the apparatus comprising a device according to claim 6.

20. Packaging plant (2) for the packaging of a pourable product comprising at least one conditioning device (1, 1', 1") according to any one of the preceding claims from 1 to 16, or an apparatus according to any of Claims from 17 to 19.
